# EUROPÄISCHE PATENTSCHRIFT

(11) **EP 2 296 120 B1**
(45) Veröffentlichungstag und Bekanntmachung des Hinweises auf die Patenterteilung: **15.05.2013**
(21) Anmeldenummer: 10401102.8
(22) Anmeldetag: 16.07.2010
(51) Int. Cl.: G07G 1/00, G06F 1/16, G06K 7/08

(54) **Datenverarbeitungsvorrichtung**
Data processing device
Dispositif de traitement de données

(30) Priorität: 03.09.2009 DE 102009043941
(43) Veröffentlichungstag der Anmeldung: 16.03.2011
(73) Patentinhaber: Wincor Nixdorf International GmbH, 33106 Paderborn (DE)
(72) Erfinder: Rybaczyk, Marek, 12159 Berlin (DE); Kirschke, Uwe, 13505 Berlin (DE); Glagla, Mathias, 16761 Henningsdorf (DE); Kulik, Mathias, 14774 Brandenburg (DE)
(74) Vertreter: Richly, Erik

(56) Entgegenhaltungen:
- EP-A2- 0 917 083
- WO-A1-2004/027701
- DE-A1- 10 212 720
- DE-B3-102007 040 085
- US-A- 4 913 387
- US-A1- 2007 138 360
- US-B1- 7 542 283

## Beschreibung

Die Erfindung betrifft eine Datenverarbeitungsvorrichtung, insbesondere eine Bezahlvorrichtung, mit einem Gehäuse, das eine Mehrzahl von geradlinigen Seitenwänden aufweist, wobei ein Kartenleser über eine Halteeinrichtung an einer vorgegebenen Seitenwand befestigt ist, zu der ein an einer Vorderseite des Kartenlesers angeordneter Kartenschlitz mit einer vorgegebenen Durchzugsrichtung für eine Karte parallel verläuft.

Aus der DE 102 12 720 B4 ist eine Datenverarbeitungsvorrichtung mit einem Gehäuse bekannt, das als ein Monitorgehäuse für ein Kassensystem ausgebildet ist. Ein Kartenleser ist an einer in Vorderansicht vertikalen rechten Seitenwandung des Monitorgehäuses angeordnet. Damit die Zugänglichkeit für einen Linkshänder verbessert ist, ist der Kartenleser schwenkbar gelagert ausgeführt, so dass die vor dem Monitorgehäuse stehende Person in ergonomisch günstiger Weise mit der linken Hand eine Karte durch den Kartenschlitz ziehen kann. Durch die unterschiedlich einstellbare Relativlage des Kartenlesers zu dem Monitorgehäuse kann die Universalität in der Handhabung des Kassensystems verbessert werden.

Die US2007/138360A1 beschreibt ein System zur Befestigung von Geräten an einen Bildschirm. Die US4913387A beschreibt eine Vorrichtung zur ablösbaren Befestigung eines Eingabegeräts eines Computers. Die US7542283B1 beschreibt einen Computer mit integriertem Bildschirm und einer Aufnahme für ein Telefon. Die WO2004/027701A1 beschreibt einen tragbaren IC-Kartenleser. Die EP0917083A2 beschreibt ein tragbares Datenterminal mit elektrischer Anzeigevorrichtung und die DE10212720A1 beschreibt ein Kartenlesegerät für Datenarbeitsplätze.

Aufgabe der vorliegenden Erfindung ist es, eine Datenverarbeitungsvorrichtung mit einem Gehäuse und an einem demselben befestigten Kartenleser derart weiterzubilden, dass die Universalität in der Handhabung des Kartenlesers in Abhängigkeit von den Einsatzbedingungen der Datenverarbeitungsvorrichtung auf einfache Weise weiter verbessert werden kann.

Zur Lösung dieser Aufgabe ist die Erfindung in Verbindung mit dem Oberbegriff des Patentanspruchs 1 dadurch gekennzeichnet, dass die Halteeinrichtung einerseits und eine den Kartenschlitz aufweisende Baueinheit des Kartenlesers andererseits derart ausgebildet sind, dass lediglich durch Verdrehung der Halteeinrichtung um einen vorgegebenen Drehwinkel relativ zu der Baueinheit des Kartenlesers dieselbe wahlweise in eine erste Montageposition unter Anlage an einer ersten Seitenwand des Gehäuses und in eine zweite Montageposition unter Anlage an einer zu der ersten Seitenwand parallelen zweiten Seitenwand des Gehäuses bringbar ist, wobei die vorgegebene Durchzugsrichtung des Kartenschlitzes in die gleiche Richtung verläuft.

Der besondere Vorteil der Erfindung besteht darin, dass derselbe Kartenleser an unterschiedlichen Seitenwänden des Gehäuses montierbar ist. Hierdurch ergibt sich eine verbesserte Handhabung der Kartenlesefunktion. Handelt es sich beispielsweise bei der Datenverarbeitungsvorrichtung um einen Datenverarbeitungsplatz für ein Kassensystem, kann der Kartenleser bei einem rechtshändischem Nutzer an einer vertikalen rechten Seitenwand des Monitorgehäuses und bei einem linkshändischen Nutzer an einer vertikalen linken Seitenwand platziert werden. Nach der Erfindung ist sichergestellt, dass eine vorgegebene Durchzugsrichtung des Kartenleserschlitzes stets in die gleiche Richtung verläuft. Das Durchziehen der Karte durch den Kartenschlitz kann somit stets in der gleichen Richtung erfolgen. Grundgedanke der Erfindung ist es, eine Halteeinrichtung sowie eine den vorderseitigen Kartenschlitz aufweisende Baueinheit derart auszugestalten, dass lediglich durch Verdrehung der Halteeinrichtung ein Wechsel von einer ersten Montageposition in eine zweite Montageposition des Kartenlesers und umgekehrt gewährleistet ist. Bei entsprechenden Anschlußmöglichkeiten des Gehäuses an gegenüberliegenden Seitenwänden kann in Abhängigkeit von den örtlichen Gegebenheiten entweder der Kartenleser in der gewünschte ersten oder zweiten Montageposition montiert oder durch Umrüstung von der ersten Montageposition in die zweite Montageposition oder umgekehrt gewechselt werden. Bei der Umrüstung wird die den Kartenschlitz aufweisende Baueinheit lediglich senkrecht zu der Seitenwand der Montageposition verschoben. Eine Drehung der Baueinheit relativ zu dem Gehäuse ist nicht notwendig, so dass die Karte unabhängig von der Montageposition stets in der gleichen Durchzugsrichtung durch den Kartenschlitz bewegt werden kann.

Dabei ist die Halteeinrichtung erfindungsgemäß als eine Halteplatte ausgebildet, die zum einen an einer ersten Randseite Befestigungsmittel zur Befestigung derselben an der ersten Seitenwand oder zweiten Seitenwand des Gehäuses und zum anderen an einer Flachseite Befestigungsmittel zur Befestigung derselben an der Baueinheit aufweist. Vorteilhaft ist die Halteeinrichtung somit lediglich in einer Fläche mit der Baueinheit verbunden, so dass der Aufwand zur Sicherstellung der lagerichtigen Halterung der Halteeinrichtung in Relation zu der Baueinheit beim Wechsel des Kartenlesers von der ersten Montageposition in die zweite Montageposition und umgekehrt reduziert ist. Vorteilhaft können dieselben Befestigungsmittel zur Befestigung der Halteplatte an dem Gehäuse sowie an der Baueinheit verwendet werden.

Dabei umfasst das Befestigungsmittel an der Flachseite der Halteplatte ein schlüssellochförmiges Langloch, so dass die Baueinheit mit einem von demselben abragenden und in das schlüssellochförmige Langloch eingreifenden Schraubbolzen entlang des Langlochs verschiebbar ist zwischen einer der Seitenwand zugekehrten Festlegposition, in der die Baueinheit fest mit der Halteplatte verbindbar ist, und einer der Seitenwand abgekehrten Montage-/Demontageposition, in der die Baueinheit an die Halteplatte ansetzbar oder von der Halteplatte lösbar ist. Vorteilhaft kann hierdurch die Baueinheit an der bereits am Gehäuse montierten Halteplatte angesetzt bzw. von derselben gelöst werden, ohne dass der Schraubbolzen von der Baueinheit entfernt werden müsste. Stattdessen muss der Schraubbolzen nur so weit mit seinem Kopf gelöst werden, dass ein Verschieben entlang des Langloches ermöglicht wird.

Die Befestigungsmittel weisen erfindungsgemäß an der ersten Randseite der Halteplatte mindestens eine in korrespondierende Schlitze des Gehäuses ein greifende Haltezungen und einen Befestigungsflansch mit einer Bohrung für die Schraubverbindung mit der ersten Seitenwand oder zweiten Seitenwand des Gehäuses auf. Auf diese Weise wird eine sichere Rast-/Klemm- und Schraubverbindung zwischen der Halteplatte einerseits und dem Gehäuse andererseits gewährleistet. Hierdurch kann insbesondere eine formschlüssige und kraftschlüssige Verbindung zwischen der Halteeinrichtung und dem Gehäuse verwirklicht werden.

Nach einer Weiterbildung der Erfindung weist das schlüssellochförmige Langloch auf einer der Seitenwand zugewandten Seite eine Festlegbohrung auf, deren Durchmesser kleiner ist als ein Kopf der Befestigungsschraube. Hierdurch wird sichergestellt, dass die Baueinheit kraftschlüssig an der Halteplatte befestigbar ist.

Nach einer Weiterbildung der Erfindung weist die Festlegbohrung der Halteplatte eine Senkung auf, so dass bei einer Demontage des Kartenlesers ein unerwünschtes Wegziehen bzw. Verschieben der Baueinheit von der Seitenwand weg, ohne dass der Schraubbolzen gelöst worden ist, verhindert wird. Durch diese zusätzliche formschlüssige Halterung eines Kopfes der Befestigungsschraube in der Fixierposition derselben wird eine unerwünschte Beschädigung des Kartenlesers infolge eines unsachgemäßen Demontagevorgangs verhindert.

Weitere Vorteile der Erfindung ergeben sich aus den weiteren Unteransprüchen. Ein Ausführungsbeispiel der Erfindung wird nachfolgend anhand der Figuren näher erläutert.

Es zeigen:

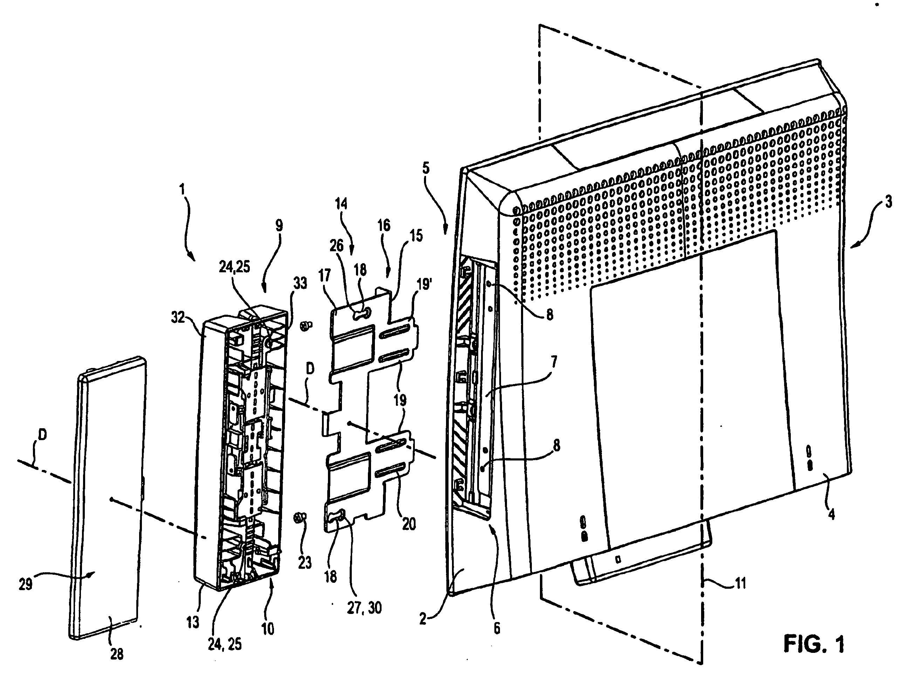

- Figur 1: eine Explosionsdarstellung eines Kartenlesers mit einer eine Elektronikeinheit sowie einen Kartenschlitz aufweisenden Baueinheit, einer Halteeinrichtung sowie einer Rückwand zur Befestigung des Kartenlesers an einer sich entlang einer vertikalen rechten Seitenwand eines Monitorgehäuses erstreckenden Anschlusseinheit desselben,

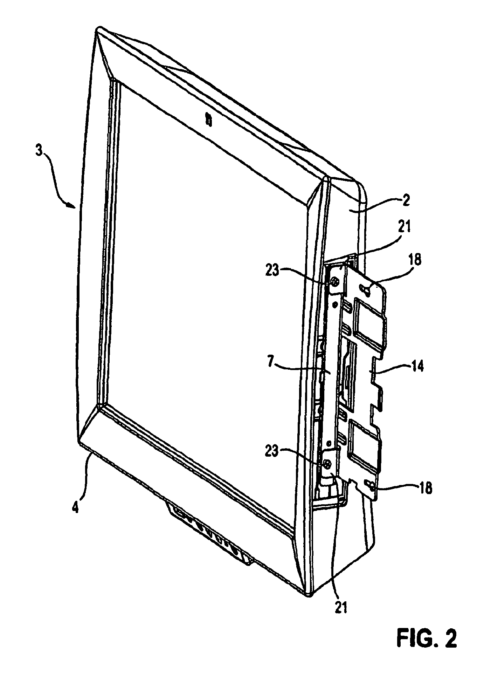

- Figur 2: eine perspektivische Vorderansicht des Monitorgehäuses mit einer an der rechten Seitenwand desselben montierten Halteeinrichtung,
- Figur 3: eine perspektivische Rückansicht des Monitorgehäuses in einer Montage-/Demontageposition der Baueinheit an der Halteeinrichtung gemäß Figur 2,
- Figur 4: eine perspektivische Rückansicht des Monitorgehäuses in einer Festlegposition der Baueinheit an der Halteplatte gemäß Figur 2,

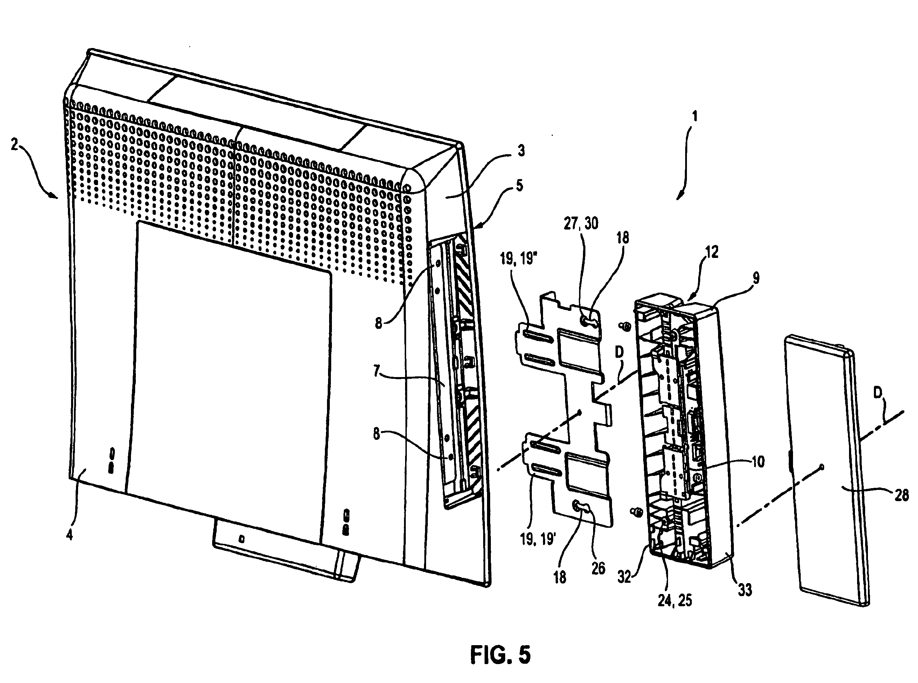

- Figur 5: eine Explosionsdarstellung des Kartenlesers zur Befestigung desselben an einer sich entlang einer vertikalen linken Seitenwand des Monitorgehäuses erstreckenden Anschlusseinheit desselben, wobei im Unterschied zu Figur 1 die Halteplatte und die Rückwand um 180° gedreht, die Baueinheit jedoch lediglich in horizontaler Richtung verschoben angeordnet sind, und

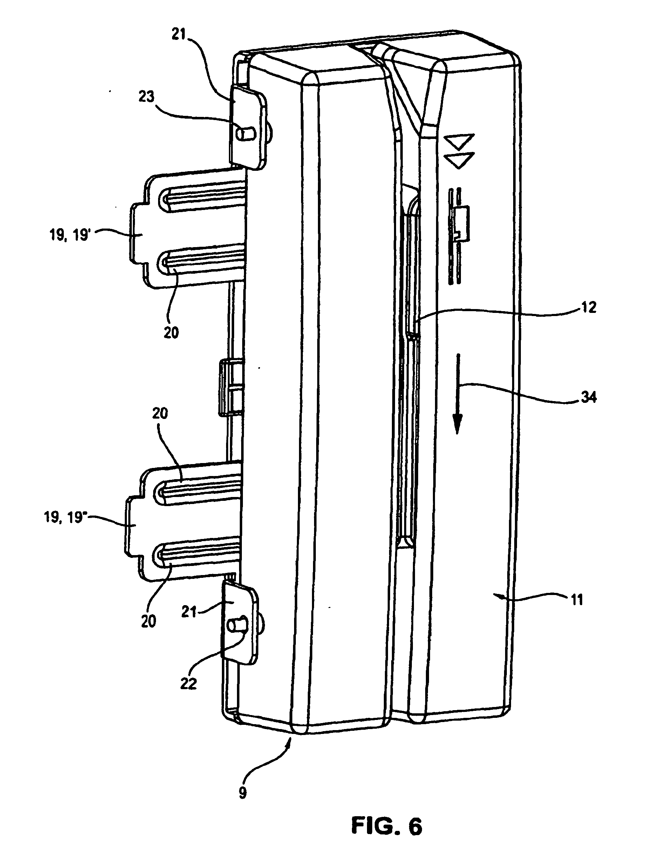

- Figur 6: eine perspektivische Vorderansicht des Kartenlesers.

Eine Datenverarbeitungsvorrichtung entsprechend der Erfindung kann beispielsweise in Kassensystemen, Geldausgabeautomaten, Druckern, Multifunktions- und Kioskterminals integriert sein. Im vorliegenden Ausführungsbeispiel ist die Datenverarbeitungsvorrichtung als eine Bezahlvorrichtung eines Kassensystems ausgebildet, bei der ein Kartenleser 1 (Kartenlesermodul) wahlweise an einer vertikalen ersten Seitenwand 2 oder an einer gegenüberliegenden zu derselben parallel verlaufenden zweiten Seitenwand 3 eines als Monitorgehäuse 4 ausgebildeten Gehäuses montierbar ist. Die erste Seitenwand 2 kann beispielsweise eine vertikale rechte Seitenwand und die zweiten Seitenwand 3 eine vertikale linke Seitewand des Monitorgehäuses 4 sein. Zu diesem Zweck weist das Monitorgehäuse 4 an der rechten Seitenwand 2 und an der linken Seitenwand 3 jeweils symmetrisch zu einer vertikalen Mittelebene M des Monitorgehäuses 4 ausgebildete Anschlusseinheiten 5 mit Befestigungsmitteln 6 zur Befestigung mit dem Kartenleser 1 sowie nicht dargestellten Kabelverbindungen bzw. Steckern zur elektrischen Verbindung mit dem Kartenleser 1 auf.

Die Befestigungsmittel 6 umfassen eine Befestigungsleiste 7, an der an gegenüberliegenden Endbereichen Bohrungen 8 mit Innengewinden vorgesehen sind. Die Anschlusseinheit 5 ist in einer Ausnehmung der Seitenwand 2, 3 angeordnet, die im nicht montierten Zustand des Kartenlesers 1 durch eine nicht dargestellte Abdeckkappe abgedeckt, und in der abschnittsweise der Kartenleser 1 im montierten Zustand eingefasst ist.

Der Kartenleser 1 besteht im Wesentlichen aus einer kompakten Baueinheit 9, die im Wesentlichen eine Elektronikeinheit 10 sowie ein die Elektronikeinheit 10 sowie einen an einer Vorderseite 11 des Kartenlesers 1 angeordneter Kartenschlitz 12 aufnehmendes wannenförmiges Gehäuse 13 aufweist. Zur Befestigung des Kartenlesers 1 ist eine als Halteplatte 14 ausgebildete Halteeinrichtung vorgesehen, die zum einen an einer ersten Randseite 15 Befestigungsmittel 16 zur Befestigung derselben an der rechten Seitenwand 2 oder der linken Seitenwand 3 und zum anderen an einer Flachseite 17 Befestigungsmittel 18 zur Befestigung derselben an der Baueinheit 9 aufweist.

Die Befestigungsmittel 16 zur Befestigung der Halteplatte 14 der rechten Seitenwand 2 oder der linken Seitenwand 3 umfassen zum einen zwei in einer Erstreckungsebene der Halteplatte 14 abragende Haltezungen 19, die in korrespondierende Schlitze der Anschlusseinheit 5 vorzugsweise rastend eingreifen. Zu diesem Zwecke weisen die Haltezungen 19 jeweils in Montagerichtung verlaufende Längserhebungen 20 auf. Zum anderen umfassen die Befestigungsmittel 16 zur Befestigung der Halteplatte 14 an der Anschlusseinheit 5 ein bezüglich der Erstreckungsebene der Halteplatte 14 erhabene Befestigungsflansche 21, die an gegenüberliegenden Stirnseiten der Halteplatte 14 angeordnet sind.

Zur Montage des Kartenlesers 1 an der rechten Seitenwand 2 in einer ersten Montagestellung wird nach Abnehmen der Abdeckkappe von der Anschlusseinheit 5 in einem ersten Schritt die Halteplatte 14 unter Eingreifen der Haltezungen 19 in die jeweiligen Schlitze der Anschlusseinheit 5 an die Anschlusseinheit 5 angesetzt, bis die Befestigungsflansche 21 auf der Befestigungsleiste 7 zur Anlage kommen. In einem zweiten Schritt werden Befestigungsschrauben 23 in zueinander fluchtende Bohrungen 22 des Befestigungsflansches 21 einerseits und Bohrungen 8 der Befestigungsleiste 7 andererseits eingeschraubt. Zu diesem Zweck weisen die Bohrungen 8 der Befestigungsleiste 7 ein Innengewinde auf. Somit ist die Halteplatte 14 zum einen mittels der Haltezungen 19 formschlüssig und mittels der Befestigungsflansche 21 und der Befestigungsschrauben 23 kraftschlüssig mit der Anschlusseinheit 5 der rechten Seitenwand 2 verbunden.

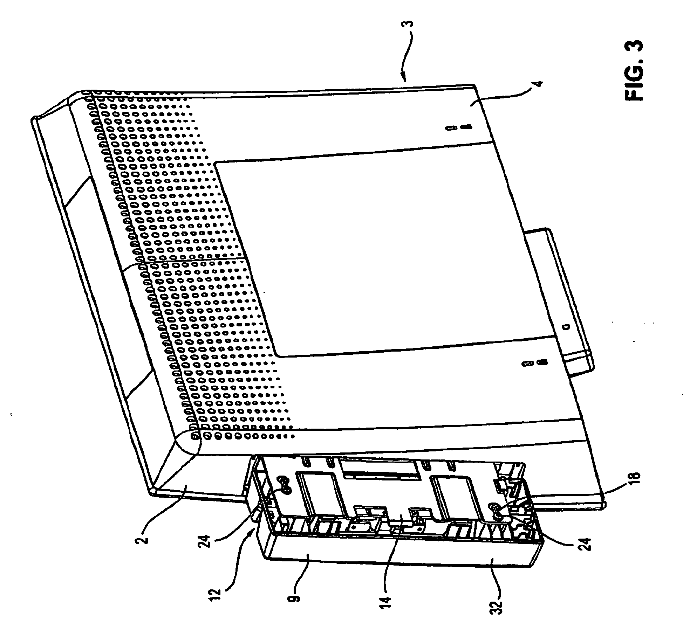

In einem weiteren Montageschritt wird nun die Baueinheit 9 von vorne an die Halteplatte 14 angesetzt, wobei ein Kopf 24 einer in Eingriff mit der Baueinheit 9 befindlichen Befestigungsschraube 25 in ein breites Ende 26 des als schlüssellochförmiges Langloch ausgebildeten Befestigungsmittels 18 der Halteplatte 14 eingreift. Zu diesem Zweck ist der Durchmesser einer der rechten Seitenwand 2 abgekehrten Durchlassbohrung 26 des Langlochs 18 größer als der Durchmesser des Kopfes 24 der Befestigungsschraube 25. Die Baueinheit 9 befindet sich nunmehr in einer Montageposition gemäß Figur 3. In dieser Montageposition befindet sich die Baueinheit 9 noch außerhalb der Anschlusseinheit 5.

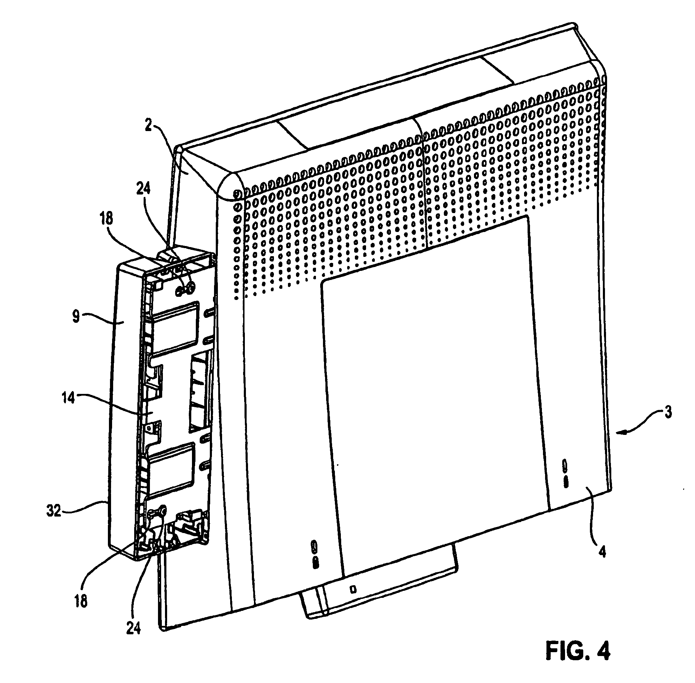

In einem weiteren Montageschritt wird die Baueinheit 9 quer zur vertikalen Mittelebene M entlang des Langlochs 18 von der Montageposition gemäß Figur 3 in eine Festlegposition gemäß Figur 4 verbracht, in der ein der rechten Seitenwand 2 zugewandter Abschnitt der Baueinheit 9 innerhalb der Ausnehmung der rechten Seitenwand 2 angeordnet ist. Die Baueinheit 9 weist somit ihre Solllage auf, in der sich die Befestigungsschraube 25 in einer zu der Durchlassbohrung 26 gegenüberliegenden Festlegbohrung 27 des Langlochs 18 befindet. In dieser Festlegposition wird in einem weiteren Montageschritt die Befestigungsschraube 25 unter Verpressen der Halteplatte 14 gegen die Baueinheit 9 angezogen.

Der elektrische Anschluss der Baueinheit 9 kann durch Steckverbinder vor Erreichen der Festlegposition, mit Erreichen der Festlegposition oder danach erfolgen. In einem abschließenden Montageschritt wird eine die Öffnung der Baueinheit 9 abdeckende Rückwandung 28 auf dieselbe durch Klipsen befestigt. Die Rückwandung 28 bildet eine Rückseite 29 des Kartenlesers 1.

Die Demontage des Kartenlesers 1 von der rechten Seitenwand 2 erfolgt in umgekehrter Reihenfolge. Um zu vermeiden, dass bei der Demontage durch Wegziehen der Baueinheit 9 von der rechten Seitenwand 2, ohne dass die Befestigungsschraube 25 gelöst worden ist, eine Beschädigung des Kartenlesers 1 eintritt, weist die Festlegbohrung 27 eine Senkung 30 auf. Diese Senkung 30 ist gegenüber der Flachseite 17 der Halteplatte 14 vertieft ausgebildet, so dass die angezogene Befestigungsschraube 25 mit Ihrem Kopf 24 stets formschlüssig an der Halteplatte 14 gehalten ist. Dieser Formschluss ermöglicht ein unerwünschtes Herausbrechen der Befestigungsschraube 25 aus der Festlegbohrung 27 in Richtung der Durchlassbohrung 26 des Langlochs 18.

Sobald die Befestigungsschraube 25 von der Festlegposition gemäß Figur 4 in die Demontageposition gemäß Figur 3 verbracht worden ist, kann durch die vergrößerte Durchlassbohrung 26 die Baueinheit 9 von der Halteplatte 14 entnommen werden.

Für eine Umrüstung des an der rechten Seitenwand 2 montierten Kartenlesers 1 aus der ersten Montagestellung in eine zweite Montagestellung an der linken Seitenwand 3 oder für eine Erstmontage des Kartenlesers 1 an der linken Seitenwand 3 wird die Halteplatte 14 entlang eines Drehwinkels von 180° um die Drehachse D verdreht in die entsprechende Anschlusseinheit 5 der linken Seitenwand 3 montiert. Hierbei greift eine erste Haltezunge 19' in einen unteren Schlitz der linken Seitenwand 3 und eine zweite Haltezunge 19" der Halteplatte 14 in einen oberen Schlitz der linken Seitenwand 3 ein. Die Position der Festlegbohrungen 27 bzw. Durchlassbohrungen 26 der Halteplatte 14 sowie eine Eingriffsposition 31 der Befestigungsschraube 25 an der Baueinheit 9 sind derart gewählt, dass die Baueinheit 9 durch Verbringen derselben aus der Montageposition in die Festlegposition um die gleiche Strecke in die an der linken Seitenwand 3 angeordnete Anschlusseinheit 5 eingesetzt wird wie in die an der rechten Seitenwand 2 angeordnete Anschlusseinheit 5.

Während die Rückwandung 28 -wie die Halteplatte 14 - um die Drehachse D entlang eines Winkels von 180° gedreht werden muss, wenn der Kartenleser 1 von der rechten Seitenwand 2 auf die linke Seitenwand 3 umgerüstet werden soll, ist es für die Baueinheit 9 nicht erforderlich. Diese wird lediglich quer zur der rechten Seitenwand 2 und der linken Seitenwand 3 in horizontaler Richtung verschoben, so dass die Baueinheit 9 mit einer zweiten Längsseite 32 in die Anschlusseinheit 5 der linken Längsseite 3 eingesetzt wird statt mit einer ersten Längsseite 33 an der rechten Seitewand 2. Hierdurch ist gewährleistet, dass eine vorgegebene Durchzugsrichtung 34 des Kartenleserschlitzes 12 stets in vertikaler Richtung von oben nach unten verläuft. Dies führt zu einer einheitlichen Handhabung des Kartenlesers 1, da eine entsprechende Bezahlkarte stets von oben nach unten durch den Kartenschlitz 12 durchziehbar ist.

Die Halteplatte 14 ist vorzugsweise aus einem Blechmaterial hergestellt. Das Gehäuse 13 des Kartenlesers 1 ist -wie die Rückwandung 28 - im Wesentlichen aus einem Kunststoffmaterial hergestellt.

Die Erfindung ist nicht beschränkt auf die Montage des Kartenlesers 1 an einer rechten oder linken Seitenwand 2, 3. Gegebenfalls kann der Kartenleser 1 auch an einer horizontalen Seitenwand des Monitorgehäuses 4 oder an einem anderen Gehäuse befestigt sein.

### Bezugszeichenliste

| | | | |
|---|---|---|---|
| 1 | Kartenleser | 26 | Durchlassbohrung |
| 2 | rechte Seitenwand | 27 | Festlegbohrung |
| 3 | linke Seitenwand | 28 | Rückwandung |
| 4 | Monitorgehäuse | 29 | Rückseite |
| 5 | Anschlusseinheit | 30 | Senkung |
| 6 | Befestigungsmittel | 31 | Eingriffsposition |
| 7 | Befestigungsleiste | 32 | Längseite |
| 8 | Bohrungen | 33 | Längsseite |
| 9 | Baueinheit | 34 | Durchzugsrichtung |
| 10 | Elektronikeinheit | | |
| 11 | Vorderseite | D | Drehachse |
| 12 | Kartenschlitz | M | Mittelebene |
| 13 | Gehäuse | | |
| 14 | Halteplatte | | |
| 15 | Randseite | | |
| 16 | Befestigungsmittel | | |
| 17 | Flachseite | | |
| 18 | Langloch | | |
| 19 | Haltezunge | | |
| 20 | Längserhebungen | | |
| 21 | Befestigungsflansche | | |
| 22 | Bohrung | | |
| 23 | Befestigungsschraube | | |
| 24 | Kopf | | |
| 25 | Befestigungsschraube | | |

## Patentansprüche

1. Datenverarbeitungsvorrichtung, insbesondere eine Bezahlvorrichtung, mit einem Gehäuse, das eine Mehrzahl von geradlinigen Seitenwänden aufweist, wobei ein Kartenleser über eine Halteeinrichtung an einer vorgegebenen Seitenwand befestigt ist, zu der ein an einer Vorderseite des Kartenlesers angeordneter Kartenschlitz mit einer vorgegebenen Durchzugsrichtung für eine Karte parallel verläuft, **dadurch gekennzeichnet,**
- **dass** die Halteeinrichtung (14) einerseits und eine den Kartenschlitz (12) aufweisende Baueinheit (9) des Kartenlesers (1) andererseits derart ausgebildet sind,
- **dass** lediglich durch Verdrehung der Halteeinrichtung (14) um einen vorgegebenen Drehwinkel relativ zu der Baueinheit (9) des Kartenlesers (1) dieselbe wahlweise in eine erste Montagestellung unter Anlage an einer ersten Seitenwand (2) des Gehäuses (4) und in eine zweite Montagestellung unter Anlage an einer zu der ersten Seitenwand (2) parallelen zweiten Seitenwand (3) des Gehäuses (4) bringbar ist, wobei die vorgegebene Durchzugsrichtung (34) des Kartenschlitzes (12) in die gleiche Richtung verläuft,
- **dass** die Halteeinrichtung eine Halteplatte aufweist, die zum einen an einer ersten Randseite (15) Befestigungsmittel (16) zur Befestigung derselben an der ersten Seitenwand (2) oder der zweiten Seitenwand (3) und zum anderen an einer Flachseite (17) Befestigungsmittel (18) zur Befestigung derselben an der Baueinheit (9) aufweist,
- **dass** das Befestigungsmittel (18) an der Flachseite (17) der Halteplatte (14) als ein schlüssellochförmiges Langloch ausgebildet ist, derart, dass die Baueinheit (9) mit einem abragenden Schraubbolzen (25) entlang des Langlochs (18) verschiebbar ist zwischen einer der Seitenwand (2, 3) zugekehrten Festlegposition, in der die Baueinheit (9) fest mit der Halteplatte (14) verbindbar ist, und einer der Seitenwand (2, 3) abgekehrten Montage-/Demontageposition, in der die Baueinheit (9) an die Halteplatte (14) ansetzbar oder von der Halteplatte (14) lösbar ist,
- **dass** die Halteplatte (14) an der ersten Randseite (15) als Befestigungsmittel mindestens eine in korrespondierende Schlitze des Gehäuses (4) eingreifbare Haltezunge (19) und einen Befestigungsflansch (21) mit einer Bohrung (22) für die Schraubverbindung mit der ersten Seitenwand (2) oder der zweiten Seitenwand (3) des Gehäuses (4) aufweist.

2. Datenverarbeitungsvorrichtung nach einem der Ansprüche 1, **dadurch gekennzeichnet, dass** der Bolzen der Baueinheit (9) als eine mit der Baueinheit (9) in Dreheingriff befindliche Befestigungsschraube (25) ausgebildet ist, deren Durchmesser kleiner ist als eine der Seitenwand (2, 3) abgekehrte Durchlassbohrung (26) des schlüssellochförmigen Langlochs (18).

3. Datenverarbeitungsvorrichtung nach Anspruch 1 oder 2, **dadurch gekennzeichnet, dass** das schlüssellochförmige Langloch (18) auf einer der Seitenwand (2, 3) zugewandten Seite eine Festlegbohrung (27) aufweist, deren Durchmesser kleiner ist als ein Kopf (24) der Befestigungsschraube (25).

4. Datenverarbeitungsvorrichtung nach einem der Ansprüche 1 bis 3, **dadurch gekennzeichnet, dass** die Festlegbohrung (27) der Halteplatte (14) von einer Senkung (30) umgeben ist, derart, dass der Kopf (24) der fixierten Befestigungsschraube (25) gegenüber einer rückwärtigen Flachseite (17) der Halteplatte (14) vertieft angeordnet ist.

5. Datenverarbeitungsvorrichtung nach einem der Ansprüche 1 bis 4, **dadurch gekennzeichnet, dass** die Halteplatte (14) aus einem Blechmaterial gebildet ist.

6. Datenverarbeitungsvorrichtung nach einem der Ansprüche 1 bis 5, **dadurch gekennzeichnet, dass** die Anschlusseinheit (5) der ersten Seitenwand (2) und der zweiten Seitenwand (3) eine Vertiefung aufweist, in der die Baueinheit (9) in der Festlegposition teilweise eingreift.

7. Datenverarbeitungsvorrichtung nach einem der Ansprüche 1 bis 6, **dadurch gekennzeichnet, dass** die Position der Festlegbohrungen (27) und Durchlassbohrungen (26) der Halteplatte (14) sowie eine Eingriffsposition (31) der Befestigungsschraube (25) an der Baueinheit (9) derart gewählt sind, dass die Baueinheit (9) durch Verbringen derselben aus der Montageposition in die Festlegposition in die an der zweiten Seitenwand (3) angeordnete Anschlusseinheit (5) um die gleiche Strecke eingesetzt wird wie in die an der ersten Seitenwand (2) angeordnete Anschlusseinheit (5).

## Claims

1. Data-processing apparatus, in particular a payment apparatus, having a housing with a plurality of rectilinear side walls, wherein a card reader is fastened, via a retaining device, on a predetermined side wall, to which runs parallel a card slot which is arranged on a front side of the card reader and has a predetermined swiping direction for a card, **characterized**
- **in that** the retaining device (14), on the one hand, and, on the other hand, a structural unit (9) of the card reader (1) which contains the card slot (12) are designed such
- that simply rotating the retaining device (14) by a predetermined angle of rotation relative to the structural unit (9) of the card reader (1) allows the retaining device to be moved optionally into a first installation position, with abutment against a first side wall (2) of the housing (4), and into a second installation position, with abutment against a second side wall (3) of the housing (4), the second side wall being parallel to the first side wall (2), wherein the predetermined swiping direction (34) of the card slot (12) runs in the same direction,
- that the retaining device has a retaining plate, which has on the one hand, on a first peripheral side (15), fastening means (16) for fastening the same on the first side wall (2) or the second side wall (3) and on the other hand, on a flat side (17), fastening means (18) for fastening the same on the structural unit (9),
- that the fastening means (18) on the flat side (17) of the retaining plate (14) is designed as a keyhole-shaped slot such that the structural unit (9) can be displaced, by way of a projecting bolt (25), along the slot (18) between a securing position, which is directed towards the side wall (2, 3) and in which the structural unit (9) can be fixed to the retaining plate (14), and an installation/removal position, which is directed away from the side wall (2, 3) and in which the structural unit (9) can be attached to the retaining plate (14) or released from the retaining plate (14),
- that, on the first peripheral side (15), the retaining plate (14) has, as fastening means, at least one retaining tongue (19), which can be engaged in corresponding slots of the housing (4), and a fastening flange (21) with a bore (22) for screw-connection to the first side wall (2) or the second side wall (3) of the housing (4).

2. Data-processing apparatus according to Claim 1, **characterized in that** the bolt of the structural unit (9) is designed as a fastening screw (25) which is in rotary engagement with the structural unit (9) and of which the diameter is smaller than a through-bore (26) which forms part of the keyhole-shaped slot (18), and is directed away from the side wall (2, 3).

3. Data-processing apparatus according to Claim 1 or 2, **characterized in that**, on a side which is directed towards the side wall (2, 3), the keyhole-shaped slot (18) has a securing bore (27), of which the diameter is smaller than a head (24) of the fastening screw (25).

4. Data-processing apparatus according to one of Claims 1 to 3, **characterized in that** the securing bore (27) of the retaining plate (14) is enclosed by a depression (30) such that the head (24) of the fixed fastening screw (25) is arranged in a recessed state in relation to a rear flat side (17) of the retaining plate (14).

5. Data-processing apparatus according to one of Claims 1 to 4, **characterized in that** the retaining plate (14) is formed from a sheet-metal material.

6. Data-processing apparatus according to one of Claims 1 to 5, **characterized in that** the connection unit (5) of the first side wall (2) and of the second side wall (3) has a recess, in which the structural unit (9) engages partially in the securing position.

7. Data-processing apparatus according to one of Claims 1 to 6, **characterized in that** the position of the securing bores (27) and through-bores (26) of the retaining plate (14) and also an engagement position (31) of the fastening screw (25) on the structural unit (9) are selected such that the structural unit (9), by virtue of being displaced out of the installation position into the securing position, is inserted into the connection unit (5) arranged on the second side wall (3) by the same extent as it is inserted into the connection unit (5) arranged on the first side wall (2).

## Revendications

1. Dispositif de traitement des données, en particulier dispositif de paiement, comprenant un boîtier qui présente une pluralité de parois latérales rectilignes, un lecteur de carte étant fixé par le biais d'un dispositif de retenue sur une paroi latérale prédéfinie, parallèlement à laquelle une fente à carte disposée au niveau d'un côté avant du lecteur de carte s'étend avec une direction d'insertion prédéfinie pour une carte, **caractérisé en ce que**
- le dispositif de retenue (14) d'une part, et une unité structurelle (9) présentant la fente à carte (12) du lecteur de carte (1) d'autre part sont réalisés de telle sorte
- que seulement par rotation du dispositif de retenue (14) d'un angle de rotation prédéterminé par rapport à l'unité structurelle (9) du lecteur de carte (1), celui-ci peut être amené de manière sélective dans une première position de montage par application contre une première paroi latérale (2) du boîtier (4) et dans une deuxième position de montage par application contre une deuxième paroi latérale (3) du boîtier (4) parallèle à la première paroi latérale (2), la direction d'insertion prédéfinie (34) de la fente à carte (12) s'étendant dans la même direction,
- **en ce que** le dispositif de retenue présente une plaque de retenue qui présente d'une part au niveau d'un premier côté de bord (15) des moyens de fixation (16) pour la fixation de celui-ci à la première paroi latérale (2) ou à la deuxième paroi latérale (3) et d'autre part au niveau d'un côté plat (17) des moyens de fixation (18) pour la fixation de celui-ci à l'unité structurelle (9),
- **en ce que** le moyen de fixation (18) au niveau du côté plat (17) de la plaque de retenue (14) est réalisé sous forme de trou oblong en forme de trou de serrure, de telle sorte que l'unité structurelle (9) puisse être déplacée avec un boulon fileté saillant (25) le long du trou oblong (18) entre une position de fixation tournée vers la paroi latérale (2, 3), dans laquelle l'unité structurelle (9) peut être connectée fixement à la plaque de retenue (14), et une position de montage/démontage opposée à la paroi latérale (2, 3), dans laquelle l'unité structurelle (9) peut être appliquée contre la plaque de retenue (14) ou être détachée de la plaque de retenue (14),
- **en ce que** la plaque de retenue (14) présente, au niveau du premier côté de bord (15) en tant que moyen de fixation au moins une langue de retenue (19) pouvant venir en prise dans des fentes correspondantes du boîtier (4) et une bride de fixation (21) avec un alésage (22) pour la connexion vissée à la première paroi latérale (2) ou à la deuxième paroi latérale (3) du boîtier (4).

2. Dispositif de traitement des données selon la revendication 1, **caractérisé en ce que** le boulon de l'unité structurelle (9) est réalisé sous forme de vis de fixation (25) en prise rotative avec l'unité structurelle (9), dont le diamètre est inférieur à un alésage de passage (26) du trou oblong en forme de trou de serrure (18) opposé à la paroi latérale (2, 3).

3. Dispositif de traitement des données selon la revendication 1 ou 2, **caractérisé en ce que** le trou oblong en forme de trou de serrure (18) présente, sur un côté tourné vers la paroi latérale (2, 3), un alésage de fixation (27) dont le diamètre est inférieur à une tête (24) de la vis de fixation (25).

4. Dispositif de traitement des données selon l'une quelconque des revendications 1 à 3, **caractérisé en ce que** l'alésage de fixation (27) de la plaque de retenue (14) est entouré par un lamage (30), de telle sorte que la tête (24) de la vis de fixation fixée (25) soit disposée de manière renfoncée par rapport à un côté plat arrière (17) de la plaque de retenue (14).

5. Dispositif de traitement des données selon l'une quelconque des revendications 1 à 4, **caractérisé en ce que** la plaque de retenue (14) est formée d'un matériau en tôle.

6. Dispositif de traitement des données selon l'une quelconque des revendications 1 à 5, **caractérisé en ce que** l'unité de raccordement (5) de la première paroi latérale (2) et de la deuxième paroi latérale (3) présente un renfoncement dans lequel l'unité structurelle (9) vient en prise partiellement dans la position de fixation.

7. Dispositif de traitement des données selon l'une quelconque des revendications 1 à 6, **caractérisé en ce que** la position des alésages de fixation (27) et des alésages de passage (26) de la plaque de retenue (14) ainsi qu'une position d'engagement (31) de la vis de fixation (25) sur l'unité structurelle (9) sont choisies de telle sorte que l'unité structurelle (9) soit insérée par déplacement de cette dernière hors de la position de montage dans la position de fixation dans l'unité de raccordement (5) disposée au niveau de la deuxième paroi latérale (3) sur la même distance que dans l'unité de raccordement (5) disposée au niveau de la première paroi latérale (2).
